# FASCICULE DE BREVET EUROPEEN

(11) **EP 3 647 636 B1**
(45) Date de publication et mention de la délivrance du brevet: **16.06.2021**
(21) Numéro de dépôt: 19204441.0
(22) Date de dépôt: 21.10.2019
(51) Int. Cl.: F16K 3/26, F16K 5/04, F16K 31/04

(54) **VANNE DE RÉGULATION D'UN FLUX DE FLUIDE EQUIPÉE D'UN ACTIONNEUR ÉLECTRIQUE ET SYSTÈME COMPRENANT UNE TELLE VANNE**
REGULIERUNGSVENTIL FÜR FLÜSSIGKEITSFLUSS, DAS MIT EINEM ELEKTRISCHEN STELLGLIED AUSGESTATTET IST, UND EIN SOLCHES VENTIL UMFASSENDES SYSTEM
CONTROL VALVE OF A STREAM OF FLUID PROVIDED WITH AN ELECTRICAL ACTUATOR AND SYSTEM COMPRISING SUCH A VALVE

(30) Priorité: 29.10.2018 FR 1859982
(43) Date de publication de la demande: 06.05.2020
(73) Titulaire: Liebherr-Aerospace Toulouse SAS, 31200 Toulouse (FR)
(72) Inventeur: BRISTIEL, Frédéric, 31016 TOULOUSE Cedex 2 (FR); VILAMOT, Raphaël, 31016 TOULOUSE Cedex 2 (FR); LAFOND, Eric, 31016 TOULOUSE Cedex 2 (FR); FAUQUE, Stéphane, 31016 TOULOUSE Cedex 2 (FR)
(74) Mandataire: Bringer IP

(56) Documents cités:
- EP-A1- 2 653 758
- WO-A1-2014/072715
- WO-A1-2016/034418
- US-A- 3 127 909
- US-A- 4 789 132
- US-A1- 2008 224 075

## Description

### 1. Domaine technique de l'invention

L'invention concerne une vanne de régulation d'un flux de fluide, notamment d'un flux d'air. L'invention concerne en particulier une vanne de régulation d'un flux de fluide agencée dans un environnement moteur d'un aéronef. L'invention concerne également un système de conditionnement d'air comprenant une telle vanne et concerne aussi un système de ventilation comprenant une telle vanne.

### 2. Arrière-plan technologique

Un système de conditionnement d'air d'une cabine d'un aéronef comprend en général un dispositif de prélèvement d'air comprimé sur au moins un compresseur d'un moteur de propulsion de l'aéronef et une turbomachine à cycle à air comprenant au moins un compresseur et une turbine, le compresseur étant alimenté en air par le dispositif de prélèvement d'air comprimé après passage par une vanne de régulation de débit ou de pression, et la turbine comprenant une sortie d'air alimentant la cabine en température et débit contrôlés. Le système de conditionnement d'air comprend également différents échangeurs de chaleur, vannes de régulation et une boucle d'extraction d'eau.

Une vanne de régulation d'air est destinée à permettre le contrôle du débit d'air circulant dans la conduite de circulation d'air équipée de cette vanne de régulation.

Une telle vanne de régulation peut être agencée dans l'environnement moteur c'est-à-dire, dans la nacelle moteur ou au voisinage immédiat du moteur, sur les tuyaux de prélèvement d'air.

Une telle vanne de régulation est également utilisée dans les systèmes de ventilation d'air des moteurs d'aéronefs qui sont logés dans la nacelle du moteur.

L'agencement de ces vannes de régulation dans un environnement moteur nécessite de les associer à des actionneurs de vanne qui peuvent tenir les températures élevées qui règnent dans cet environnement moteur.

Il est également nécessaire d'utiliser une vanne qui présente un encombrement limité pour pouvoir être agencée dans cet environnement moteur.

Pour répondre à ces deux contraintes, l'une des solutions mise en œuvre actuellement est d'utiliser une vanne contrôlée par un actionneur hydraulique dont le fluide de commande est le carburant. Cet actionneur hydraulique à carburant pilote l'ouverture et la fermeture de la vanne. L'actionneur est par exemple doté d'un capteur de déplacement, tel qu'un capteur de déplacement connu sous l'acronyme anglais LVDT pour « *Linear Variable Differential Transformer* ». Ce capteur LVDT détecte le passage du fluide de commande, en l'occurrence le carburant, et conditionne l'ouverture ou la fermeture de la vanne.

L'actionnement de la vanne est donc obtenu par la pression du carburant sur l' actionneur hydraulique qui entraine le déplacement de l'organe d'obturation de la vanne, tel qu'un papillon.

Lorsque la vanne est logée dans l'environnement moteur, l'actionneur hydraulique, également logé dans l'environnement moteur, est soumis à des températures élevées qui peuvent atteindre près de 500 °C au cours du vol de l'aéronef. Le refroidissement de l'actionneur hydraulique est assuré par le carburant qui contrôle l'actionneur.

L'utilisation de carburant en tant que fluide muscle pour piloter l'actionneur hydraulique peut présenter des inconvénients notamment dans un environnement moteur. En effet, le circuit du carburant doit être dimensionné pour que la pression du carburant commande l'actionneur hydraulique. De plus, l'utilisation d'un circuit de carburant pour piloter les actionneurs augmente la consommation du système de pompage du carburant et peut également entraîner des risques de fuite de carburant. Aussi, l'utilisation d'un actionneur à carburant génère des contraintes d'intégration qui peuvent s'avérer complexes et/ou couteuses à prendre en compte.

En outre, dans un environnement moteur, l'ensemble formé de la vanne et de son actionneur hydraulique présente un encombrement et un poids significatif qui peut impacter les performances énergétiques de l'aéronef.

Une solution alternative pourrait être de recourir à des actionneurs électriques. Cela étant, il est connu que de tels actionneurs ne peuvent pas être utilisés dans un environnement moteur compte tenu des températures élevées qui règnent dans cet environnement, sauf à prévoir des systèmes complexes dédiés de refroidissement des actionneurs électriques.

Des solutions connues de vannes de régulation ont été décrites dans EP 2 653 758 A1, US 3 127 909 A ou WO 2016/034418 A1.

Les inventeurs ont donc cherché à développer une nouvelle solution pour piloter les vannes de régulation de fluide, et notamment d'air, adaptées aux environnements moteurs.

### 3. Objectifs de l'invention

L'invention vise à fournir une vanne de régulation d'un flux de fluide, notamment d'un flux d'air, pouvant être aménagée au sein d'un environnement moteur d'un aéronef qui pallie au moins certains des inconvénients des solutions connues.

L'invention vise en particulier à fournir une vanne équipée d'un actionneur électrique compatible avec les contraintes thermiques d'un environnement moteur d'un aéronef.

L'invention vise également à fournir, dans au moins un mode de réalisation, une vanne qui présente un encombrement réduit par rapport aux vannes des solutions antérieures.

L'invention vise aussi à fournir un système de conditionnement d'air équipé d'une vanne de régulation selon l'invention.

L'invention vise aussi à fournir un système de ventilation équipé d'une vanne de régulation selon l'invention.

L'invention vise aussi à fournir un véhicule de transport aérien ou ferroviaire équipé d'un système de conditionnement d'air ou d'un système de ventilation selon l'invention.

### 4. Exposé de l'invention

Pour ce faire, l'invention concerne, selon son acception la plus générale, une vanne de régulation d'un flux de fluide comprenant :
- un corps de vanne comprenant une entrée de fluide, une sortie de fluide, et un canal de circulation de fluide qui s'étend selon une direction, dite direction longitudinale, entre l'entrée de fluide et la sortie de fluide,
- un organe d'obturation agencé dans ledit canal de circulation de fluide configuré pour pouvoir présenter au moins une première position, dite position ouverte, dans laquelle il permet au flux de fluide de circuler librement dans ledit canal de circulation, et au moins une deuxième position, dite position fermée, dans laquelle il empêche, au moins en partie, la circulation de fluide dans ledit canal de circulation entre ladite entrée de fluide et ladite sortie de fluide,
- un actionneur électrique dudit organe d'obturation adapté pour pouvoir commander la position dudit organe d'obturation dans ledit canal de circulation de fluide,
ledit actionneur électrique étant agencé au moins partiellement dans ledit canal de circulation de fluide de manière à permettre son refroidissement par ledit fluide circulant entre l'entrée de fluide et la sortie de fluide dudit corps de vanne.

Une vanne selon l'invention est caractérisée en ce que ledit organe d'obturation comprend deux éléments concentriques conjugués : un élément fixe par rapport audit corps de vanne et un élément rotatif par rapport audit élément fixe, dit boisseau, commandé par ledit actionneur électrique.

Une vanne selon l'invention présente donc la particularité d'utiliser un actionneur électrique et d'intégrer cet actionneur au moins partiellement dans ledit canal de circulation de fluide du corps de vanne de manière à ce que cet actionneur électrique puisse être refroidi par le flux de fluide circulant dans le canal de circulation de la vanne. Cet actionneur électrique peut également être associé à un réducteur pour entrainer l'organe d'obturation. Le cas échéant, le réducteur est également logé dans ledit canal de circulation de fluide.

En d'autres termes, une vanne selon l'invention permet à la fois de réguler un flux de fluide (par l'actionnement de l'organe d'obturation) et de refroidir l'actionneur de cet organe d'obturation (par le biais du flux de fluide circulant dans le canal de circulation dans lequel l'actionneur est logé).

Une vanne selon l'invention permet de s'affranchir d'une ventilation dédiée pour l'actionneur électrique. Cette suppression d'une ventilation dédiée permet ainsi de supprimer un prélèvement d'air dédié au refroidissement de l'actionneur et donc de maximiser le flux d'air utile dans le système dans lequel la vanne est intégrée.

La régulation de ce flux de fluide est permise par la présence d'un organe d'obturation qui peut présenter au moins une première position, dite position ouverte, autorisant la circulation d'un fluide de l'entrée vers la sortie de fluide du corps de vanne, et au moins une deuxième position, dite position fermée, dans laquelle l'organe d'obturation empêche, au moins en partie, la circulation d'un fluide dans ledit corps de vanne.

Dans la position, dite position ouverte, le débit de fluide est maximal à travers l'organe d'obturation. Dans la position, dite position fermée, le débit de fluide est minimal à travers l'organe d'obturation.

Selon une variante de l'invention, l'organe d'obturation empêche toute circulation de fluide dans la position fermée. Selon cette variante, l'organe d'obturation s'étend en travers du canal de circulation pour bloquer le passage de fluide dans la position fermée. En d'autres termes, le débit minimal de fluide correspond à un débit nul.

Selon un autre mode de réalisation, l'organe d'obturation bloque seulement une partie du flux dans la position fermée. Cette variante permet par exemple de maintenir une fuite de fluide lorsque l'organe d'obturation est dans la position fermée.

Selon l'invention, l'organe d'obturation comprend deux éléments concentriques conjugués : un élément fixe par rapport audit corps de vanne et un élément rotatif par rapport audit élément fixe, dit boisseau.

L'actionneur électrique permet le déplacement de l'organe d'obturation et donc la régulation du débit de fluide. Cet actionneur peut lui-même être piloté par une unité de commande configurée pour imposer la position de l'organe d'obturation dans le canal de circulation de fluide.

Selon l'invention, l'actionneur électrique entraine en rotation, le boisseau, par le biais d'un réducteur, par rapport à l'élément fixe permettant à l'organe d'obturation de présenter au moins une position ouverte autorisant le passage de fluide et au moins une position fermée limitant au moins en partie le passage de fluide.

Dans toute la suite, l'élément rotatif est désigné par le terme de boisseau ou par le terme de chemise.

En outre, l'actionneur commande les positions d'ouverture et de fermeture de l'organe d'obturation et le fluide circulant dans le canal de circulation refroidit ledit actionneur.

L'actionneur électrique permet donc de coordonner les deux éléments concentriques conjugués pour réguler la circulation de fluide.

Selon une variante de l'invention, l'organe d'obturation peut également être piloté par l'actionneur électrique pour occuper au moins une position, dite position intermédiaire, dans laquelle la section de passage de fluide est intermédiaire entre la section de passage minimale correspondant à la position fermée et la section de passage maximale correspondant à la position ouverte de la vanne.

La vanne selon l'invention, qui intègre l'actionneur électrique dans le canal de circulation de fluide, présente un encombrement réduit. Une vanne selon l'invention est donc particulièrement adaptée aux espaces réduits et aux environnements soumis à des conditions thermiques sévères.

Avantageusement et selon l'invention, le canal de circulation de fluide présente au moins un axe de symétrie qui s'étend le long de la direction longitudinale et ledit actionneur électrique est agencé sur cet axe de symétrie.

Selon cette variante avantageuse, l'actionneur électrique est agencé au centre du canal de circulation, c'est-à-dire sur l'axe de symétrie longitudinal du canal de circulation. Cet agencement particulier permet de limiter les vibrations de l'ensemble formé de la vanne et de l'actionneur. Le canal peut par exemple être un canal à symétrie de révolution et l'actionneur est agencé sur cet axe de symétrie de révolution.

Cet agencement spécifique permet également d'isoler l'actionneur électrique de l'environnement moteur en formant un matelas d'air entre l'actionneur électrique et l'environnement moteur extérieur, y compris lorsque la conduite de circulation n'est pas alimentée en air. Ce matelas d'air limite la conduction thermique entre l'actionneur électrique et l'environnement moteur.

Avantageusement et selon l'invention, ledit actionneur électrique est agencé en amont de l'organe d'obturation.

Selon cette variante, ledit actionneur est agencé en amont de l'organe d'obturation, de sorte que le fluide puisse refroidir l'actionneur avant de traverser l'organe d'obturation lorsqu'il est dans la position ouverte qui permet le passage de fluide.

Cette variante permet en outre à l'actionneur d'être refroidi même lorsque l'organe d'obturation est dans la position fermée qui limite la circulation de l'entrée de fluide vers la sortie de fluide de la vanne.

En variante ou en combinaison, l'organe d'obturation peut comprendre au moins un orifice d'axe longitudinal configuré pour permettre la formation d'une fuite de fluide à travers l'organe d'obturation. Cela permet d'assurer un refroidissement de l'actionneur électrique, quel que soit l'agencement de l'actionneur par rapport à l'organe d'obturation.

Avantageusement et selon l'invention, ledit boisseau dudit organe d'obturation délimite un conduit central qui comprend une paroi transversale étanche.

Selon cette variante, ladite paroi transversale étanche s'étend perpendiculairement à la direction longitudinale de manière à entraver la circulation selon la direction longitudinale en aval de cette paroi et à améliorer ainsi l'étanchéité.

La paroi transversale étanche peut être formée par exemple par l'actionneur et plus particulièrement par le carter protégeant l'actionneur, ou tout élément obturant ledit conduit central à une extrémité afin de contraindre la circulation du fluide tout en assurant l'étanchéité.

Selon une variante avantageuse, lesdits éléments concentriques conjugués formant ledit organe d'obturation sont cylindriques.

Selon cette variante, les éléments concentriques sont cylindriques, au sens mathématique du terme, c'est-à-dire qu'ils prennent la forme d'un solide engendré par une droite qui se déplace parallèlement à elle-même sur une génératrice. Cette génératrice peut être un cercle, un ovale, un carré et de manière générale toute courbe fermée.

Selon une variante avantageuse, les éléments cylindriques concentriques conjugués sont à base circulaire. Selon cette variante, ledit organe d'obturation comprend donc deux éléments cylindriques concentriques conjugués dont l'un, dit interne, présente un premier diamètre, et l'autre, dit externe, présente un deuxième diamètre plus grand que ledit premier diamètre de l'élément cylindrique interne.

Ledit élément cylindrique interne peut être fixe ou rotatif par rapport audit élément cylindrique externe qui est respectivement rotatif ou fixe.

De préférence, ledit élément cylindrique interne est rotatif par rapport audit élément cylindrique externe qui est fixe.

Avantageusement et selon l'invention, lesdits éléments concentriques conjugués comprennent chacun une paroi munie d'au moins une lumière de passage de fluide agencée de manière à ce que le flux de fluide soit contraint de circuler à travers lesdites lumières lorsque ledit actionneur électrique commande la rotation dudit élément rotatif de sorte que lesdites lumières des éléments conjugués soient en regard l'une de l'autre et correspondant à ladite position ouverte dudit organe d'obturation, et qu'il soit contraint lorsque ledit actionneur électrique commande la rotation dudit élément rotatif de sorte que les lumières de passage de fluide des éléments conjugués soient respectivement en regard de la paroi de l'élément cylindrique conjugué, et correspondant à ladite position fermée dudit organe d'obturation.

Selon cette variante, les éléments concentriques conjugués comprennent des lumières de passage de fluide afin de pouvoir réguler le débit de fluide circulant dans le canal de circulation.

La dimension et la forme des lumières est telle que pour un angle de rotation du boisseau défini, le passage du fluide est complètement fermé ou complètement ouvert. Toutes les positions intermédiaires permettent de réguler le débit de fluide à l'intérieur de la conduite de circulation de fluide.

La mise en regard des lumières respectives de l'élément fixe et du boisseau permet de libérer une section de passage radiale par laquelle le fluide peut circuler librement.

Lorsque les lumières de passage de fluide sont mises en regard des parois des éléments concentriques conjugués respectifs, le passage radial de fluide est bloqué ou limité, ce qui empêche ou limite le passage de fluide dans le canal de circulation de fluide.

Lorsque les lumières de passage sont partiellement mises en regard les unes des autres, des sections de passages radiales partielles sont formées, ce qui permet de contrôler le débit d'air entre l'entrée de fluide et la sortie de fluide. Ces positions correspondent aux positions intermédiaires de l'organe d'obturation.

Le pilotage coordonné de l'ouverture et de la fermeture de l'organe d'obturation et par conséquent de la mise en regard des lumières de passage desdits éléments cylindriques concentriques conjugués permet de réguler le passage de fluide dans le canal de circulation et donc le débit du flux.

Avantageusement et selon l'invention, chaque élément concentrique comprend un nombre impair de lumières de passage de fluide régulièrement réparties sur sa paroi.

Un nombre impair de lumières de passage de fluide permet d'améliorer la répartition des efforts et de limiter les efforts antagonistes exercés par le flux de fluide sur les éléments concentriques conjugués, en particulier lorsque les éléments concentriques sont cylindriques.

Selon cette variante, les éléments concentriques conjugués présentent plusieurs lumières de passage, qui lorsqu'elles sont mises en regard les unes des autres, autorisent le passage du fluide.

Les lumières de passage sont de préférence régulièrement réparties sur chaque paroi des éléments concentriques conjugués pour permettre un passage de fluide homogène dans le canal de circulation.

Selon cette variante, les lumières de passage desdits éléments concentriques conjugués sont agencées de manière uniforme et identique sur les deux éléments concentriques conjugués.

Le nombre de lumières de passage d'air peut être quelconque. Rien n'empêche par exemple de prévoir des organes concentriques conjugués munis d'une seule lumière ou de N lumières, où N est entier quelconque prédéterminé, de préférence supérieur ou égal à 3, par exemple 6 ou 7.

Avantageusement et selon l'invention, ledit flux de fluide circulant dans ledit corps de vanne est un flux d'air.

Selon cette variante, le flux d'air circule dans ledit corps de vanne et plus particulièrement dans le canal de circulation, dans lequel est logé l'actionneur. Le flux d'air permet ainsi la dissipation de la chaleur dudit actionneur.

L'invention concerne également un système de conditionnement d'air d'une cabine d'un aéronef comprenant au moins une vanne de régulation d'air selon l'invention.

Les avantages d'une vanne de régulation selon l'invention s'appliquent *mutatis mutandis* à un système de conditionnement d'air selon l'invention.

L'invention concerne également un aéronef comprenant au moins un moteur propulsif, une cabine et au moins un système de conditionnement d'air de ladite cabine, caractérisé en ce que le système de conditionnement d'air de la cabine est le système de conditionnement d'air conforme à l'invention.

Les avantages d'un système de conditionnement d'air selon l'invention s'appliquent *mutatis mutandis* à un aéronef selon l'invention.

L'invention concerne également un aéronef caractérisé en ce que ladite vanne de régulation d'air dudit système de conditionnement d'air de la cabine est logée dans l'environnement moteur d'au moins un moteur propulsif dudit aéronef.

Selon cette variante, la vanne est agencée dans un environnement moteur. L'actionneur agencé dans ledit corps de vanne est refroidi par le flux d'air et peut ainsi être utilisé dans cet environnement présentant des conditions thermiques sévères.

En d'autres termes, le flux d'air qui circule autour de l'actionneur électrique dans la conduite de circulation de la vanne permet de maintenir la température de celui-ci dans une zone de fonctionnement compatible de son domaine de fonctionnement et l'isole de la température ambiante de l'environnement moteur qui est supérieure à celle supportable par l'actionneur électrique.

Par ailleurs, la vanne selon cette variante présente un encombrement réduit, ce qui libère de l'espace dans l'environnement moteur, par rapport aux solutions de l'art antérieur.

L'invention concerne également une vanne, un système de conditionnement d'air et un aéronef, caractérisés par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe d'une vanne selon un mode de réalisation de l'invention,
- la figure 2 est une vue schématique en coupe d'une vanne selon un mode de réalisation de l'invention illustrant l'organe d'obturation dans la position fermée,
- la figure 3 est une vue schématique en coupe d'une vanne selon un mode de réalisation de l'invention illustrant l'organe d'obturation dans la position ouverte,
- la figure 4 est une vue schématique en coupe d'une vanne selon un mode de réalisation de l'invention illustrant l'organe d'obturation dans une position intermédiaire entre la position ouverte et la position fermée,
- la figure 5 est une vue schématique en coupe longitudinale d'un corps de vanne selon un mode de réalisation de l'invention illustrant l'organe d'obturation dans la position ouverte,
- la figure 6 est une vue schématique en coupe longitudinale du corps de vanne de la figure 5 selon un mode de réalisation de l'invention illustrant l'organe d'obturation dans la position fermée, et
- la figure 7 est une vue schématique d'un aéronef selon un mode de réalisation.

### 6. Description détaillée d'un mode de réalisation de l'invention

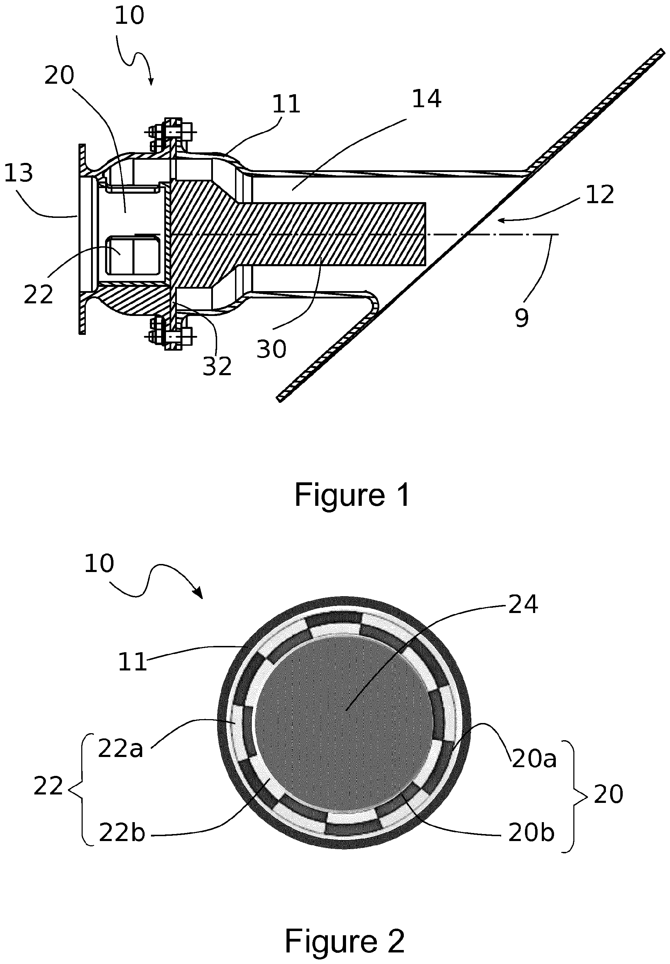

Sur les figures, les échelles et les proportions ne sont pas strictement respectées et ce, à des fins d'illustration et de clarté. Dans toute la description détaillée qui suit en référence aux figures, sauf indication contraire, chaque élément de la vanne est décrit tel qu'il est agencé lorsque l'actionneur électrique de ladite vanne est agencé dans ledit corps de vanne et notamment lorsque l'actionneur est agencé en amont de l'élément d'obturation. Cette configuration est notamment représentée sur la figure 1.

Les termes « longitudinal » et « radial » sont utilisés en référence à la direction longitudinale, définie par la direction du canal de circulation du fluide s'étendant entre une entrée de fluide et une sortie de fluide du corps de vanne.

En outre, les éléments identiques, similaires ou analogues sont désignés par les mêmes références dans toutes les figures.

Dans toute la suite, la vanne de régulation décrite est une vanne d'un système de conditionnement d'air d'un aéronef. Cela étant, selon d'autres modes de réalisation, la vanne peut être une vanne de régulation d'un fluide autre que de l'air et peut équiper d'autres systèmes que des systèmes de conditionnement d'air.

Tel que représenté sur la figure 1, une vanne 10 selon l'invention comprend un corps de vanne comprenant un carter 11, une entrée 12 d'air, une sortie 13 d'air, un canal de circulation 14 d'air qui s'étend entre l'entrée et la sortie d'air selon une direction longitudinale 9, un organe d'obturation 20 logé dans le canal de circulation d'air et un actionneur électrique 30 de l'organe d'obturation qui est agencé dans le canal de circulation 14.

Tel qu'illustré sur la figure 1, ledit actionneur 30 électrique s'étend selon la direction longitudinale 9 et est agencé intégralement dans ledit canal de circulation 14 d'air.

L'actionneur électrique 30 peut être de tout type. Il est par exemple formé d'un moteur électrique du type pas à pas ou à courant continu et d'un réducteur à train d'engrenage épicycloïdal ou autre.

Cet actionneur 30 est par exemple fixé au carter 11 de la vanne par des pattes de fixation 32 qui s'étendent radialement entre l'actionneur et le carter de vanne.

Selon le mode de réalisation des figures, cet actionneur 30 est intégralement logé dans la conduite de circulation d'air, c'est-à-dire qu'il est logé entre l'entrée d'air 12 et la sortie d'air 13.

Selon d'autres modes de réalisation de l'invention, non représentés sur les figures, l'actionneur n'est que partiellement logé dans la conduite de circulation de fluide. Le cas échéant, il s'étend au moins en partie à l'intérieur d'une conduite reliée au corps de vanne et destinée à alimenter en air un équipement du système de conditionnement d'air ou alimentant la vanne en air de prélèvement.

Selon le mode de réalisation des figures, l'actionneur 30 est agencé en amont de l'élément d'obturation 20, c'est-à-dire entre l'entrée d'air et l'organe d'obturation. Cet agencement particulier permet à l'actionneur d'être refroidi par l'air qui alimente la vanne, y compris lorsque l'élément d'obturation 20 est en position fermée.

Une unité de commande, non représentée sur les figures, permet de piloter l'actionneur 30, et donc la position de l'organe d'obturation. Cette unité de commande peut être de tous types et est par exemple l'unité de commande du système de conditionnement d'air.

Comme illustré sur les figures 2 à 4, l'organe d'obturation 20 est constitué, selon un mode préférentiel de réalisation, de deux éléments cylindriques concentriques conjugués : un élément cylindrique fixe 20a par rapport audit carter de la vanne et un boisseau cylindrique, qui forme un élément cylindrique rotatif 20b par rapport audit élément cylindrique fixe.

Chaque élément cylindrique 20a, 20b comprend une paroi 21a, 21b dans laquelle sont ménagées des lumières 22a, 22b de passage d'air. Les lumières 22a, 22b de passage d'air peuvent être de tous types. Elles forment des sections radiales de passage d'air, qui permettent d'établir une communication fluidique entre l'entrée de fluide et la sortie de fluide de la vanne lorsqu'elles sont mises en regard l'une de l'autre par la rotation du boisseau par rapport à l'élément fixe.

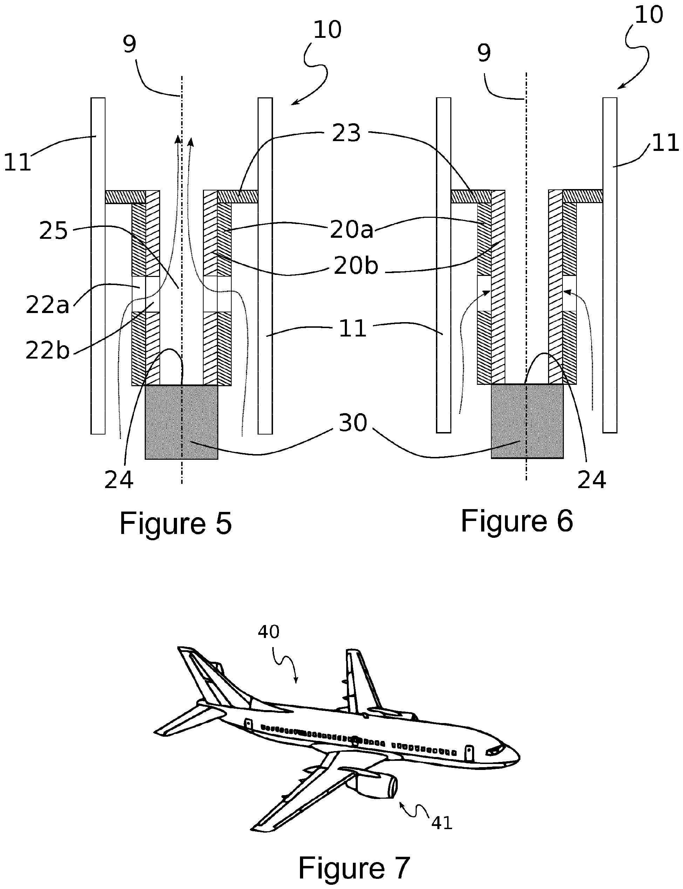

Les figures 5 et 6 illustrent de manière schématique le principe de fonctionnement d'un organe d'obturation d'une vanne selon un mode de réalisation de l'invention. L'organe d'obturation comprend des éléments cylindriques concentriques conjugués 20a, 20b qui s'étendent le long de la direction longitudinale 9.

Ces organes d'obturation concentriques conjugués 20a, 20b sont creux. Le boisseau cylindrique 20b délimite un conduit central 25 creux dans lequel l'air peut s'engouffrer. Le conduit central 25 comprend une paroi centrale étanche 24 qui s'étend perpendiculairement à la direction longitudinale et entrave donc la circulation d'air selon la direction longitudinale en aval de cette paroi. Cette paroi centrale étanche 24 peut être formée, et tel que représenté sur les figures 1, 5 et 6, par le carter de l'actionneur 30 qui obstrue le conduit central 25 à une extrémité. Selon d'autres modes de réalisation de l'invention, la paroi centrale étanche 24 est une paroi extrémale longitudinale du boisseau.

En outre, le corps de vanne comprend un carter 11 de corps de vanne. Ce dernier est relié audit élément cylindrique fixe externe 20a afin de former une couronne annulaire 23 empêchant le passage d'air le long de la direction longitudinale 9.

La couronne annulaire 23 et la paroi centrale étanche 24 sont chacune agencées à une extrémité de part et d'autre de l'organe d'obturation 20. Par conséquent, elles permettent de contraindre le fluide de traverser l'organe d'obturation 20 par lesdites lumières de passage 22 d'air lorsque l'organe d'obturation est placé dans la position ouverte.

L'air circule dans un canal délimité par le carter dudit actionneur 30 et par le carter du corps de vanne 11 avant d'atteindre l'organe d'obturation 20 et de traverser radialement les éléments cylindriques par les lumières 22a, 22b de passage d'air.

Sur la figure 5, l'organe d'obturation est dans la position ouverte et l'air passe à travers les lumières de passage d'air. Cette circulation de l'air à travers les passages d'air est schématiquement représentée par des flèches en pointillées.

Sur la figure 6, l'organe d'obturation est dans la position fermée et l'air est bloqué d'amont en aval de l'organe d'obturation par la combinaison de la rotation du boisseau 20b, de la paroi annulaire 23 et de la paroi centrale 24. Cette circulation d'air entravée est représentée schématiquement par les flèches en pointillées.

La figure 2 représente l'organe d'obturation 20 dans une position fermée dans laquelle les deux éléments cylindriques concentriques conjugués 20a, 20b empêchent la circulation d'air. Dans la position fermée, les lumières de passage 22a, 22b respectives des éléments cylindriques concentriques conjugués 20a, 20b sont agencées de sorte que les lumières de passage de fluide des éléments cylindriques conjugués soient respectivement en regard de la paroi de l'élément cylindrique conjugué, ce qui empêche l'air de traverser radialement l'organe d'obturation 20.

Selon d'autres modes de réalisation, la position fermée de l'organe d'obturation correspond à une position dans laquelle le débit est minimal. En outre, un canal de fuite d'air à travers l'organe d'obturation peut être prévu dans certaines applications de sorte que la position fermée ne permet pas d'empêcher toute circulation d'air à travers le canal de circulation de la vanne, mais de présenter un débit minimal d'air.

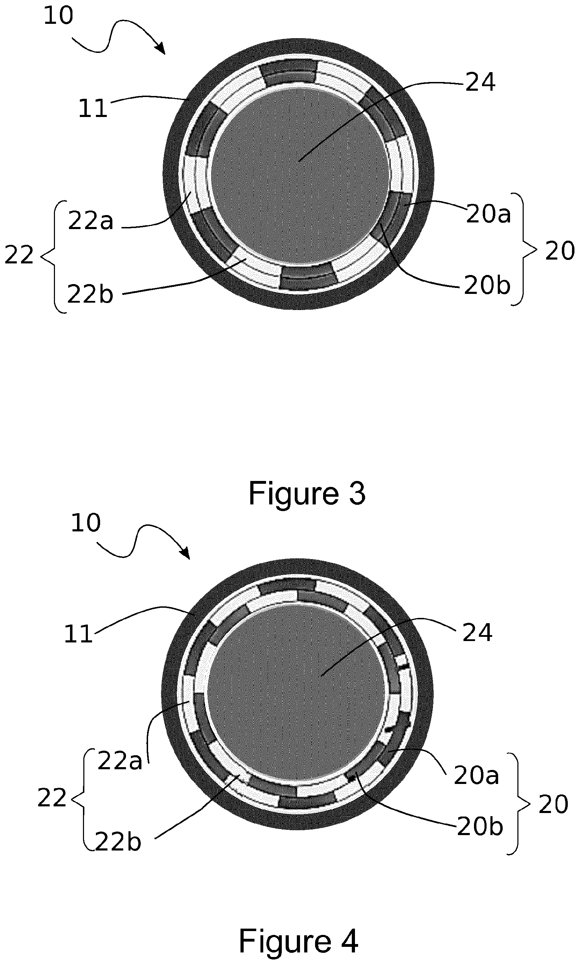

La figure 3 illustre l'organe d'obturation dans la position ouverte selon un mode de réalisation de l'invention. Les lumières de passage 22a de l'élément cylindrique fixe 20a sont agencées en regard des lumières de passage 22b du boisseau 20b de telle sorte que le flux d'air peut traverser radialement les éléments cylindriques par les passages d'air 22.

L'air peut donc passer à travers les lumières 22a, 22b de passage d'air lorsque ces dernières sont mises en regard les unes des autres.

Des positions intermédiaires peuvent également être obtenues en pivotant le boisseau par rapport à l'élément cylindrique fixe de sorte que seule une portion des lumières de passage d'air soient en regard les unes des autres. Une position intermédiaire est représentée schématiquement sur la figure 4.

Les positions intermédiaires correspondent aux différentes positions que peut adopter ledit organe d'obturation 20 pour passer de la position ouverte à la position fermée et inversement.

Lorsque l'organe d'obturation est dans une position intermédiaire, les lumières de passage 22a de l'élément cylindrique fixe 20a recouvrent donc partiellement les lumières de passage 22b du boisseau 20b. Ces positions intermédiaires permettent de faire varier le débit de flux d'air et d'adapter ce dernier aux besoins du système équipé par la vanne selon l'invention.

Sur les figures, les lumières de passage d'air du boisseau et de l'élément cylindrique fixe sont de dimensions et/ou de formes identiques.

Selon un autre mode de réalisation non représenté sur les figures, les lumières de passage 22a, 22b d'air respectives de l'élément cylindrique fixe 20a et du boisseau 20b sont de formes géométriques distinctes et/ou de dimensions distinctes. Par exemple, les lumières de passage 22a de l'élément cylindrique fixe peuvent être circulaires et présenter un diamètre inférieur aux lumières de passage 22b du boisseau.

Tel qu'illustré sur la figure 7, une vanne selon l'invention est particulièrement destinée à équiper un système de conditionnement d'air d'une cabine d'un aéronef.

Une vanne selon l'invention peut également équiper un système de ventilation d'un moteur propulsif d'un aéronef ou de tout véhicule de transport, en particulier un véhicule de transport aérien ou ferroviaire.

Une vanne selon l'invention est notamment destinée à être logée dans l'environnement moteur d'un moteur propulsif 41 d'un aéronef 40.

## Revendications

1. Vanne de régulation (10) d'un flux de fluide comprenant :
- un corps de vanne (11) comprenant une entrée (12) de fluide, une sortie (13) de fluide, et un canal de circulation (14) de fluide qui s'étend selon une direction, dite direction longitudinale, entre l'entrée de fluide et la sortie de fluide,
- un organe d'obturation (20) agencé dans ledit canal de circulation (14) de fluide configuré pour pouvoir présenter au moins une première position, dite position ouverte, dans laquelle il permet au flux de fluide de circuler librement dans ledit canal de circulation, et au moins une deuxième position, dite position fermée, dans laquelle il empêche, au moins en partie, la circulation de fluide dans ledit canal de circulation entre ladite entrée de fluide et ladite sortie de fluide,
- un actionneur électrique (30) dudit organe d'obturation (20) adapté pour pouvoir commander la position dudit organe d'obturation dans ledit canal de circulation de fluide,
ledit actionneur électrique (30) 2- pétant agencé au moins partiellement dans ledit canal de circulation de fluide de manière à permettre son refroidissement par ledit fluide circulant entre l'entrée de fluide et la sortie de fluide dudit corps de vanne, **caractérisée en ce que** ledit organe d'obturation (20) comprend deux éléments concentriques conjugués : un élément fixe (20a) par rapport audit corps de vanne et un élément rotatif (20b) par rapport audit élément fixe, dit boisseau, commandé par ledit actionneur électrique (30).

2. Vanne selon la revendication 1, **caractérisée en ce que** lesdits éléments (20a, 20b) concentriques conjugués comprennent chacun une paroi (21a, 21b) munie d'au moins une lumière (22) de passage de fluide agencée de manière à ce que le flux de fluide soit contraint de circuler à travers lesdites lumières (22) lorsque ledit actionneur électrique commande la rotation dudit élément rotatif (20b) de sorte que lesdites lumières des éléments conjugués (22a, 22b) soient en regard l'une de l'autre et correspondant à ladite position ouverte dudit organe d'obturation, et qu'il soit bloqué ou contraint lorsque ledit actionneur électrique (30) commande la rotation dudit élément rotatif (20b) de sorte que les lumières (22) de passage de fluide des éléments conjugués soient respectivement en regard de la paroi (21) de l'élément conjugué, et correspondant à ladite position fermée dudit organe d'obturation.

3. Vanne selon l'une des revendications 1 ou 2, **caractérisée en ce que** chaque élément (20a, 20b) concentrique comprend un nombre impair de lumières (22) de passage de fluide régulièrement réparties sur sa paroi (21).

4. Vanne selon l'une des revendications 1 à 3, **caractérisée en ce que** lesdits éléments concentriques conjugués formant ledit organe d'obturation sont cylindriques.

5. Vanne selon l'une des revendications 1 à 4, **caractérisée en ce que** ledit boisseau dudit organe d'obturation (20) délimite un conduit (25) central qui comprend une paroi (24) transversale étanche.

6. Vanne selon l'une des revendications 1 à 5, **caractérisée en ce que** ledit canal de circulation de fluide présente au moins un axe de symétrie qui s'étend le long de la direction longitudinale et ledit actionneur électrique est agencé sur cet axe de symétrie.

7. Vanne selon l'une des revendications 1 à 6, **caractérisée en ce que** ledit actionneur électrique (30) est agencé en amont de l'organe d'obturation (20).

8. Vanne selon l'une des revendications 1 à 7 **caractérisée en ce que** ledit flux de fluide circulant dans ledit corps de vanne (11) est un flux d'air.

9. Système de conditionnement d'air d'un véhicule de transport aérien ou ferroviaire (40) comprenant au moins une vanne (10) de régulation d'air, **caractérisé en ce que** ladite vanne est une vanne selon l'une quelconque des revendications 1 à 8.

10. Système de ventilation d'un moteur d'un aéronef comprenant au moins une vanne de régulation d'air, **caractérisé en ce que** ladite vanne est une vanne selon l'une quelconque des revendications 1 à 8.

11. Véhicule de transport aérien (40) ou ferroviaire comprenant au moins un moteur propulsif (41), une cabine et au moins un système de conditionnement d'air de ladite cabine, **caractérisé en ce que** le système de conditionnement d'air de la cabine est le système de conditionnement d'air selon la revendication 9.

12. Véhicule de transport aérien (40) ou ferroviaire selon la revendication 11, **caractérisé en ce que** ladite vanne (10) de régulation d'air dudit système de conditionnement d'air de la cabine est logée dans l'environnement moteur d'au moins un moteur propulsif (41) dudit aéronef.

## Patentansprüche

1. Fluiddurchfluss-Regelventil (10), welches umfasst:
einen Ventilkörper (11) mit einem Fluideinlass (12), einem Fluidauslass (13) und einem Fluidströmungskanal (14), der sich in einer Richtung, der sogenannten Längsrichtung, zwischen dem Fluideinlass und dem Fluidauslass erstreckt,
ein Schließelement (20), das in dem Fluidströmungskanal (14) angeordnet und ausgestaltet ist, mindestens eine erste Position, die sogenannte offene Position, in der es den Fluidstrom in dem Strömungskanal frei fließen lässt, und mindestens eine zweite Position einzunehmen, die sogenannte geschlossene Position, in der es den Fluidstrom in dem Strömungskanal zwischen dem Fluideinlass und dem Fluidauslass zumindest teilweise verhindert,
ein elektrisches Stellglied (30) des Schließelementes (20), das geeignet ist, die Position des Verschlusselementes in dem Fluidströmungskanal zu steuern, worin das elektrische Stellglied (30) zumindest teilweise in dem Fluidströmungskanal angeordnet ist, so dass dieses durch das zwischen dem Fluideinlass und dem Fluidauslass des Ventilkörpers strömende Fluid gekühlt werden kann,
**dadurch gekennzeichnet, dass** das Schließelement (20) zwei konjugierte konzentrische Elemente umfasst: ein relativ zu dem Ventilkörper festes Element (20a) und ein Drehelement (20b) relativ zu dem festen Element, wobei das Drehelement als Ventileinsatz bezeichnet wird und von dem elektrischen Stellglied (30) gesteuert wird.

2. Ventil nach Anspruch 1, **dadurch gekennzeichnet, dass** die konjugierten konzentrischen Elemente (20a, 20b) jeweils eine Wand (21a, 21b) umfassen, die mit mindestens einer Fluiddurchgangsöffnung (22) versehen ist, die derart angeordnet ist, dass die Fluidströmung gezwungen wird, durch die Öffnungen (22) zu strömen, wenn das elektrische Stellglied die Drehung des Drehelements (20b) derart steuert, dass die Öffnungen in den konjugierten Elementen (22a, 22b) einander gegenüberliegen und der offenen Position des Verschlusselementes entsprechen, und dass die Strömung blockiert oder eingeschränkt wird, wenn das elektrische Stellglied (30) die Drehung des Drehelements (20b) derart steuert, dass die Fluiddurchgangsöffnungen (22) in den konjugierten Elementen jeweils der Wand (21) des konjugierten Elements gegenüberliegen und der geschlossenen Position des Verschlusselements entsprechen.

3. Ventil nach einem der Ansprüche 1 oder 2, **dadurch gekennzeichnet, dass** jedes konzentrische Element (20a, 20b) eine ungerade Anzahl von Fluiddurchgangsöffnungen (22) umfasst, die gleichmäßig auf seiner Wand (21) verteilt sind.

4. Ventil nach einem der Ansprüche 1 bis 3, **dadurch gekennzeichnet, dass** die konjugierten konzentrischen Elemente, die das Schließelement bilden, zylindrisch sind.

5. Ventil nach einem der Ansprüche 1 bis 4, **dadurch gekennzeichnet, dass** der Ventileinsatz des Schließelementes (20) einen zentralen Kanal (25) definiert, der eine abgedichtete Querwand (24) umfasst.

6. Ventil nach einem der Ansprüche 1 bis 5, **dadurch gekennzeichnet, dass** der Fluidströmungskanal mindestens eine in Längsrichtung verlaufende Symmetrieachse aufweist und der elektrische Stellantrieb auf dieser Symmetrieachse angeordnet ist.

7. Ventil nach einem der Ansprüche 1 bis 6, **dadurch gekennzeichnet, dass** das elektrische Stellglied (30) stromaufwärts des Schließelementes (20) angeordnet ist.

8. Ventil nach einem der Ansprüche 1 bis 7, **dadurch gekennzeichnet, dass** der in dem Ventilkörper (11) strömende Fluidstrom ein Luftstrom ist.

9. Klimaanlage für ein Luft- oder Schienenfahrzeug (40) mit mindestens einem Luftregelventil (10), **dadurch gekennzeichnet, dass** das Ventil ein Ventil nach einem der Ansprüche 1 bis 8 ist.

10. Belüftungssystem für ein Flugzeugtriebwerk mit mindestens einem Luftsteuerventil, **dadurch gekennzeichnet, dass** das Ventil ein Ventil nach einem der Ansprüche 1 bis 8 ist.

11. Luft- oder Schienentransportfahrzeug (40) mit mindestens einem Antriebsmotor (41), einer Kabine und mindestens einer Klimaanlage für die Kabine, **dadurch gekennzeichnet, dass** die Klimaanlage für die Kabine die Klimaanlage nach Anspruch 9 ist.

12. Luft- oder Schienentransportfahrzeug (40) nach Anspruch 11, **dadurch gekennzeichnet, dass** das Luftsteuerventil (10) der Kabinen-Klimaanlage in der Triebwerksumgebung des mindestens einen Triebwerks (41) des Flugzeugs untergebracht ist.

## Claims

1. A fluid flow control valve (10) comprising:
- a valve body (11) comprising a fluid inlet (12), a fluid outlet (13), and a fluid flow duct (14) extending in a direction, called the longitudinal direction, between the fluid inlet and the fluid outlet,
- a closing member (20) arranged in said fluid flow duct (14) and configured so as to be able to have at least one first position, called the open position, in which it allows the fluid flow to flow freely in said flow duct, and at least one second position, called the closed position, in which it prevents, at least partially, the flow of fluid in said flow duct between said fluid inlet and said fluid outlet,
- an electric actuator (30) of said closing member (20) that is suitable for being able to control the position of said closing member in said fluid flow duct, said electric actuator (30) being arranged at least partially in said fluid flow duct such that it can be cooled by said fluid flowing between the fluid inlet and the fluid outlet of said valve body,
**characterized in that** said closing member (20) comprises two conjugate concentric elements: a fixed element (20a) relative to said valve body and a rotary element (20b) relative to said fixed element, which rotary element is called the valve core and is controlled by said electric actuator (30).

2. A valve according to claim 1, **characterized in that** said conjugate concentric elements (20a, 20b) each comprise a wall (21a, 21b) provided with at least one fluid passage aperture (22) arranged such that the flow of fluid is constrained to flow through said apertures (22) when said electric actuator controls the rotation of said rotary element (20b) such that said apertures in the conjugate elements (22a, 22b) are opposite each other and correspond to said open position of said closing member, and that said flow is blocked or constrained when said electric actuator (30) controls the rotation of said rotary element (20b) such that the fluid passage apertures (22) in the conjugate elements are respectively opposite the wall (21) of the conjugate element, and correspond to said closed position of said closing member.

3. A valve according to one of claims 1 or 2, **characterized in that** each concentric element (20a, 20b) comprises an odd number of fluid passage apertures (22) evenly distributed on its wall (21).

4. A valve according to one of claims 1 to 3, **characterized in that** said conjugate concentric elements forming said closing member are cylindrical.

5. A valve according to one of claims 1 to 4, **characterized in that** said valve core of said closing member (20) defines a central duct (25) comprising a sealed transverse wall (24).

6. A valve according to one of claims 1 to 5, **characterized in that** said fluid flow duct has at least one axis of symmetry extending along the longitudinal direction and said electric actuator is arranged on this axis of symmetry.

7. A valve according to one of claims 1 to 6, **characterized in that** said electric actuator (30) is arranged upstream of the closing member (20).

8. A valve according to one of claims 1 to 7, **characterized in that** said flow of fluid flowing in said valve body (11) is an air flow.

9. An air-conditioning system for an air or rail transport vehicle (40) comprising at least one air control valve (10), **characterized in that** said valve is a valve according to one of claims 1 to 8.

10. A ventilation system for an aircraft engine comprising at least one air control valve, **characterized in that** said valve is a valve according to one of claims 1 to 8.

11. An air or rail transport vehicle (40) comprising at least one propulsion engine (41), a cabin and at least one air-conditioning system for said cabin, **characterized in that** the air-conditioning system for the cabin is the air-conditioning system according to claim 9.

12. An air or rail transport vehicle (40) according to claim 11, **characterized in that** said air control valve (10) of said cabin air-conditioning system is housed in the engine environment of at least one propulsion engine (41) of said aircraft.
